# FASCICULE DE BREVET EUROPEEN

(11) **EP 2 189 702 B1**
(45) Date de publication et mention de la délivrance du brevet: **01.02.2012**
(21) Numéro de dépôt: 09290839.1
(22) Date de dépôt: 05.11.2009
(51) Int. Cl.: F16L 25/01, F16L 25/02, B64D 37/32, A62C 3/08

(54) **Dispositif de transport de fluide notamment pour carburant**
Vorrichtung zum Transport eines Fluids, insbesondere Kraftstoff
Device for transporting a fluid particularly fuel

(30) Priorité: 20.11.2008 FR 0806526
(43) Date de publication de la demande: 26.05.2010
(73) Titulaire: Espa, 75008 Paris (FR)
(72) Inventeur: Bouleti, Julien, 45100 Orleans (FR); Gonzalez Bayon, Christina, 45129 Chalette sur Loing (FR); Mahin, Daniel, 37510 Savonnieres (FR)
(74) Mandataire: Jacquard, Philippe Jean-Luc

(56) Documents cités:
- EP-A- 0 297 990
- DE-A1-102005 013 981
- FR-A- 2 379 143
- GB-A- 2 211 266

## Description

La présente invention a pour objet un dispositif de transport de fluide, notamment pour carburant dans une application aéronautique.

Les ailes d'avion sont le plus souvent réalisées sous forme d'une structure en matériau composite non électriquement isolant et d'éléments de rigidification électriquement conducteurs généralement en aluminium.

Les tuyaux de carburant situés à l'intérieur des ailes d'avion doivent permettre d'une part de décharger les charges électrostatiques et d'autre part d'éviter un court-circuit de la structure en cas de foudre.

Il est connu, comme par example dans EP 0297 990A1, de concevoir des tubes ayant une section centrale en matériau ayant une résistivité élevée et deux sections d'extrémité en matériau conducteur qui sont connectées par des fils conducteurs à des embouts conducteurs dont chacun est solidaire d'un élément de rigidification.

Le matériau qui constitue la section centrale est une résine epoxy chargée de fibres de verre et de noir de carbone, ce qui implique un poids relativement élevé.

La présente invention a ainsi pour objet d'assurer la fonction recherchée tout en diminuant le poids et éventuellement le coût du tube.

Dans ce but, l'invention a pour objet un dispositif de transport de fluide destiné à être incorporé à une structure non électriquemement isolante, notamment en composite et comportant un tube électriquement résistant, et des embouts conducteurs comprenant un moyen de fixation sur ladite structure, caractérisé en ce que le tube comporte :
- une section centrale ayant une résistance inférieure à 10⁴ Ω par mètre de longueur
- deux sections d'extrémités dont au moins une présente une résistance utile comprise entre 100 kΩ et 500 kΩ, qui se terminent par un raccord d'extrémité
au moins un élément conducteur reliant électriquement une section d'extrémité ayant une dite résistance utile comprise entre 100 kΩ et 500 kΩ, et un embout conducteur
la dite résistance utile étant définie comme la valeur de la résistance de la section d'extrémité entre la section centrale et l'élément conducteur.

Selon une première variante, le dispositif présente deux sections d'extrémité présentant une résistance utile comprise entre 100 kΩ et 500 kΩ et deux dits éléments conducteurs reliant chacun une section d'extrémité à l'embout conducteur correspondant.

Au moins une section d'extrémité peut comporter un prolongement de la section centrale qui est entouré successivement d'un manchon conducteur et d'un raccord d'extrémité.

Au moins un élément conducteur peut être un fil conducteur ou un joint conducteur.

Selon un premier mode de mise en oeuvre d'une deuxième variante, le dispositif est caractérisé en ce qu'il présente deux sections d'extrémité présentant une résistance utile comprise entre 100 kΩ et 500 kΩ et au moins un dit élément conducteur disposé sur une seule section d'extrémité et reliant celle-ci à l'embout conducteur correspondant.

Selon un deuxième mode de mise en oeuvre de la deuxième variante, le dispositif est caractérisé en ce qu'il présente une première section d'extrémité présentant une résistance comprise entre 100 kΩ et 500 kΩ et une deuxième section d'extrémité présentant une résistance utile inférieure à cette valeur et au moins un dit élément conducteur disposé sur la deuxième section d'extrémité et reliant celle-ci à l'embout conducteur correspondant.

La section centrale peut être en un matériau thermoplastique, thermodurcissable ou élastomère avec des charges conductrices qui servent à la fois de renfort mécanique et à ajuster la conductivité.

Au moins une section d'extrémité peut être en un matériau chargé de fibres de verre et de charges conductrices.

Au moins un raccord d'extrémité peut être en un matériau thermoplastique ou thermodurcissable avec éventuellement des charges conductrices.

L'invention sera mieux comprise à la lecture de la description ci-après, en liaison avec les dessins dans lesquels :
- les figures 1a et 1b sont une illustration schématique d'une structure d'aile d'avion, et la figure 1c un schéma électrique équivalent pour un tuyau de carburant ;
- la figure 2 représente un tube selon l'art antérieur ;
- les figures 3a et 3b représentent deux modes de mise en oeuvre d'une première variante de l'invention ;
- la figure 4 représente une deuxième variante de l'invention ;
- et la figure 5 illustre une variante de montage des raccords d'extrémité.

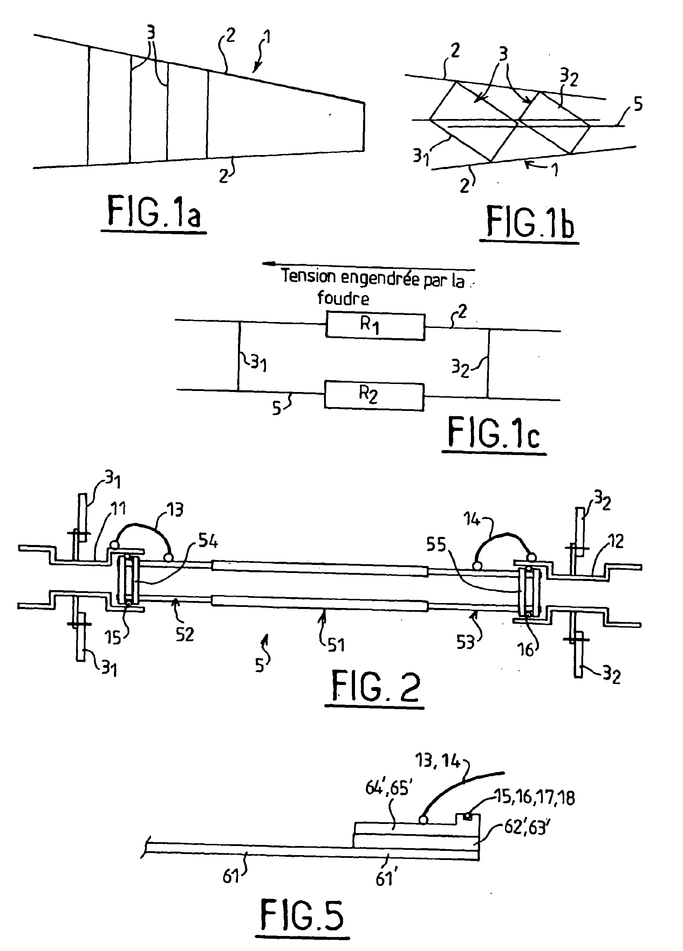

La figure 1a est une vue schématique en coupe d'une portion d'aile d'avion 1 qui comporte une structure 2 en matériau composite ayant une résistances linéique de 10³ Ω/m et des éléments de rigidification 3 en matériau conducteur tel que l'aluminium. Un ou plusieurs tubes 5 de transport de carburant (figure 1b) sont solidaires à leurs extrémités de deux éléments de structure 3₁ et 3₂.

Un schéma électrique est donné à la figure 1c. On suppose que la résistance équivalente de la structure est R₁ = 10³ Ω.

Le tube 5 pour remplir cette fonction doit avoir une résistance très supérieure à cette valeur, par exemple R₂ = 10⁵ Ω.

Le tube représenté à la figure 2 présente une section centrale 51 par exemple en résine epoxy chargée de fibres de verre et de noir de carbone, qui a une résistivité comprise entre 10⁵ et 10⁶ Ω.m. La résistivité étant élevée, il faut en effet une charge en fibres de verre, ce qui impose une épaisseur relativement élevée pour assurer les propriétés mécaniques. Les sections d'extrémité 52 et 53 sont en matériau conducteur par exemple en Al et sont prolongées par des raccords d'extrémité conducteurs 54 et 55. Des fils conducteurs 13 et 14 permettent de relier électriquement les sections d'extrémité 52 et 53 et les raccords conducteurs 11 et 12 qui sont traversés par le carburant. L'étanchéité est assurée par des joints électriquement isolants 15 et 16. Les raccords conducteurs 11 et 12 sont fixés sur des éléments de structure 3₁ et 3₂.

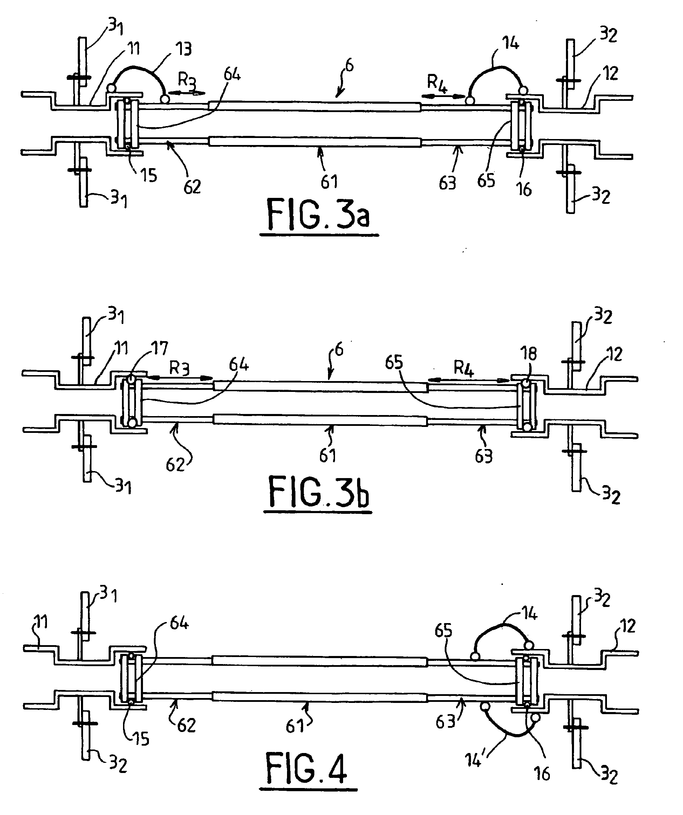

La première variante de l'invention est représentée aux figures 3a et 3b. Un tube 6 dont la longueur est par exemple comprise entre 0,2 m et 1,2 m, présente un tronçon central 61 en matériau conducteur dont la résistance linéique est inférieure à 10⁴ Ω/m, alors que les tronçons d'extrémité ont une résistance utile comprise entre 100 kΩ et 500 kΩ, la résistance utile étant définie comme la résistance R₃ ou R₄ de la section d'extrémité 62 ou 63 et le cas échéant du raccord 64, 65, 64' ou 65' entre le tronçon central 61 et le point 13' et 14' où le fil 13 ou 14 fait contact avec le tronçon d'extrémité 62 ou 63 prolongé par un raccord d'extrémité conducteur ou isolant 64 ou 65. Un raccord d'extrémité 64 et/ou 65 peut être en un matériau thermoplastique collé ou soudé (par exemple polyamide, PEEK, PEI) éventuellement chargé de fibres notamment de carbone pour le renforcer et régler sa conductivité, ou bien en un matériau thermodurcissable dont on ajuste éventuellement la conductivité par des fibres de carbone ou d'autres charges conductrices telles que graphite ou des nano-particules. Le tronçon central 61 est par exemple en un matériau thermodurcissable, ou élastomère avec des charges conductrices pour le renforcer et ajuster sa conductivité, est par exemple en résine époxy ou en polyamide chargé de charges conductrices notamment des fibres de carbone. On évite ainsi dans le tronçon central 61, qui occupe environ 80% à 95% de la longueur du tube 6, la présence de fibres de verre. De préférence, il présente seulement des charges conductrices.

Par exemple, les sections d'extrémité 62 et 63 sont en un matériau, par exemple un polyamide, chargé de fibres de verre, et de charges conductrices par exemple du noir de carbone.

La figure 3b illustre un autre mode de réalisation qui diffère de la figure 3a par la présence de joints conducteurs 17 et 18 en lieu et place des fils 13 et 14. Dans ce cas, toute la longueur des tronçons d'extrémité 62 et 63 est prise en compte pour définir les résistances R₃ et R₄.

Du fait que le tronçon central 61 a une faible résistance, il est possible de diminuer son poids, il n'est pas besoin d'ajouter des fibres de verre (les fibres de carbone suffisent), ce qui fait que son épaisseur peut être réduite tout en satisfaisant aux propriétés mécaniques requises, d'où un gain de masse par exemple de 20% à 30%. Du fait que les tronçons d'extrémité 62 et 63 ne sont pas en métal, on obtient un gain de poids en général supérieur à 15%.

Le tronçon central 61 peut comporter des fibres longues de carbone dans un matériau thermoplastique, des fibres de carbone dans un matériau thermodurcissable par exemple une résine époxy, ou bien en thermoplastique chargé ou en caoutchouc conducteur chargé avec comme charge conductrice par exemple des fibres de carbone courtes (longueur < 1mm).

Le fait que le tronçon central 61 ait une plus faible résistance que dans l'art antérieur est favorable à l'évacuation des charges, alors qu'en cas de foudre, le tube 6 qui présente une résistance électrique notablement supérieure à celle de la structure 2 évite une mise en court circuit.

Dans la variante de la figure 4, la prise de contact est réalisée seulement d'un côté par un ou deux fils 14 et 14'.

Dans ce cas, il est possible que le tronçon d'extrémité 63 soit en matériau plus conducteur que l'autre tronçon d'extrémité 61, par exemple le même matériau que le tronçon central 62.

Dans cette configuration, l'évacuation des charges électrostatique s'effectue par la liaison électrique 14 et/ou 14' et l'isolation contre la foudre est assurée par le fait que l'impédance entre les raccords 11 et 12 est infinie, car le joint 15 est électriquement isolant.

La figure 5 est une variante dans laquelle les tronçons d'extrémité 62 et 63 sont constitués par un prolongement du tronçon central 61 qui est entouré par un manchon résistif 62' ou 63', lui-même entouré d'un raccord d'extrémité 64' ou 65'. Le manchon résistif est peut être en une colle résistive ou bien encore en un caoutchouc ou en un thermoplastique chargé de fibres de verre. Le raccord d'extrémité 64' ou 65 peut être conducteur (par exemple en métal) ou résistif.

La prise de contact par le fil 13, 14 (ou par joint conducteur) s'effectue par le raccord d'extrémité 64' ou 65'. Dans le cas où celui-ci est résistif, la valeur de sa résistance est à prendre en compte pour le calcul de la résistance utile.

## Revendications

1. Dispositif de transport de fluide destiné à être incorporé à une structure non électriquemement isolante, notamment en composite et comportant un tube électriquement résistant, et des embouts conducteurs comprenant un moyen de fixation sur ladite structure, **caractérisé en ce que** le tube comporte :
- une section centrale (61) ayant une résistance inférieure à 10⁴ Ω par mètre de longueur
- deux sections d'extrémités (62, 63) dont au moins une présente une résistance utile comprise entre 100 kΩ et 500 kΩ qui se terminent par un raccord d'extrémité (64, 65)
et au moins un élément conducteur (13, 14, 14', 17, 18) reliant électriquement une section d'extrémité ayant une dite résistance utile comprise entre 100 kΩ et 500 kΩ, et un embout conducteur, la dite résistance utile étant définie comme la valeur de la résistance de la section d'extrémité entre la section centrale et l'élément conducteur.

2. Dispositif selon la revendication 1, **caractérisé en ce qu'**il présente deux sections d'extrémité (62, 63) présentant une résistance utile comprise entre 100 kΩ et 500 kΩ et deux dits éléments conducteurs (13, 14, 17, 18) reliant chacun une section d'extrémité à l'embout conducteur correspondant (11, 12).

3. Dispositif selon une des revendications 1 ou 2, **caractérisé en ce qu'**au moins un élément conducteur est un fil conducteur (13, 14).

4. Dispositif selon une des revendications 1 à 3, **caractérisé en ce qu'**au moins un élément conducteur est un joint conducteur (17, 18).

5. Dispositif selon la revendication 1, **caractérisé en ce qu'**il présente deux sections d'extrémité (62, 63) présentant une résistance utile comprise entre 100 kΩ et 500 kΩ et au moins un dit élément conducteur (14, 14') disposé sur une seule section d'extrémité (63) et reliant celle-ci à l'embout conducteur correspondant.

6. Dispositif selon la revendication 1, **caractérisé en ce qu'**il présente une première section d'extrémité (62) présentant une résistance comprise entre 100 kΩ et 500 kΩ et une deuxième section d'extrémité (63) présentant une résistance utile inférieure à cette valeur et au moins un dit élément conducteur (14, 14') disposé sur la deuxième section d'extrémité (63) et reliant celle-ci à l'embout conducteur correspondant (12).

7. Dispositif selon une des revendications précédentes, **caractérisé en ce que** la section centrale (61) est en un matériau thermoplastique, thermodurcissable ou élastomère avec des charges conductrices.

8. Dispositif selon une des revendications précédentes, **caractérisé en ce qu'**au moins une section d'extrémité (62, 63) est en un matériau chargé par des fibres de verre et des charges conductrices.

9. Dispositif selon une des revendications précédentes, **caractérisé en ce qu'**au moins un raccord d'extrémité (64, 65) est en un matériau thermoplastique ou thermodurcissable avec éventuellement des charges conductrices.

10. Dispositif selon une des revendications précédentes, **caractérisé en ce qu'**au moins une section d'extrémité (62, 63) comporte un prolongement (61') de la section centrale (61) qui est entouré successivement d'un manchon résistif (62', 63') et d'un raccord d'extrémité (64', 65').

## Claims

1. A fluid transport device for incorporating in a structure that is not electrically insulating, in particular being made of a composite and including an electrically resistive tube, with conductive endpieces including means for fastening to said structure, the device being **characterized in that** the tube comprises:
a central section (61) having resistance of less than 10⁴ Ω per meter of length; and
two end sections (62, 63), at least one of which presents effective resistance lying in the range 100 kΩ to 500 kΩ and terminating in an end coupling (64, 65);
at least one conductive element (13, 14, 14', 17, 18) electrically connecting a conductive endpiece and an end section having a said effective resistance lying in the range 100 kΩ to 500 kΩ, said effective resistance being defined as the value of the resistance of the end section between the central section and the conductive element.

2. A device according to claim 1, **characterized in that** it presents two end sections (62, 63) presenting an effective resistance lying in the range 100 kΩ to 500 kΩ and two said conductive elements (13, 14, 17, 18) each connecting one end section to the corresponding conductive endpiece (11, 12).

3. A device according to claim 1 or claim 2, **characterized in that** at least one conductive element is a conductive wire (13, 14).

4. A device according to any one of claims 1 to 3, **characterized in that** at least one conductive element is a conductive gasket (17, 18).

5. A device according to claim 1, **characterized in that** it presents two end sections (62, 63) presenting respective effective resistances lying in the range 100 kΩ to 500 kΩ and at least one said conductive element (14, 14') disposed on a single end section (63) and connecting it to the corresponding conductive endpiece.

6. A device according to claim 1, **characterized in that** it presents a first end section (62) presenting resistance lying in the range 100 kΩ to 500 kΩ and a second end section (63) presenting effective resistance less than said value, and at least one said conductive element (14, 14') disposed on the second end section (63) and connecting it to the corresponding conductive endpiece (12).

7. A device according to any preceding claim, **characterized in that** the central section (61) is made of a thermoplastic, thermosetting, or elastomer material with conductive fillers.

8. A device according to any preceding claim, **characterized in that** at least one end section (62, 63) is made of a material filled with fiberglass and conductive fillers.

9. A device according to any preceding claim, **characterized in that** at least one end coupling (64, 65) is made of a thermoplastic or thermosetting material with optional conductive fillers.

10. A device according to any preceding claim, **characterized in that** at least one end section (62, 63) includes an extension (61') of the central section (61), which extension is surrounded in succession by a resistive sleeve (62', 63') and an end coupling (64', 65').

## Patentansprüche

1. Vorrichtung zum Fluidtransport, welche dazu bestimmt ist, in eine nicht elektrisch isolierende Struktur eingebaut zu werden, insbesondere aus Verbundmaterial und mit einem elektrisch resistiven Rohr und leitenden Ansatzstücken, welche ein Mittel zur Befestigung an der Struktur aufweisen, **dadurch gekennzeichnet, dass** das Rohr umfasst:
- einen Zentralabschnitt (61) mit einem Widerstand von weniger als 10⁴ Ω pro Längenmeter,
- zwei Endabschnitte (62, 63), von welchen wenigstens einer einen Nutzwiderstand aufweist, der zwischen 100 kΩ und 500 kΩ enthalten ist, und welche in einem Endanschluss (64, 65) enden,
und wenigstens ein leitendes Element (13, 14, 14', 17, 18), welches einen Endabschnitt mit einem genannten Nutzwiderstand, der zwischen 100 kΩ und 500 kΩ enthalten ist, und ein leitendes Ansatzstück elektrisch verbindet, wobei der Nutzwiderstand definiert ist als der Wert des Widerstands des Endabschnitts zwischen dem Zentralabschnitt und dem leitenden Element.

2. Vorrichtung nach Anspruch 1, **dadurch gekennzeichnet, dass** sie zwei Endabschnitte (62, 63), welche einen Nutzwiderstand aufweisen, der zwischen 100 kΩ und 500 kΩ enthalten ist, und zwei genannte leitende Elemente (13, 14, 17, 18), welche jeweils einen Endabschnitt mit dem entsprechenden leitenden Ansatzstück (11, 12) verbinden, aufweist.

3. Vorrichtung nach einem der Ansprüche 1 oder 2, **dadurch gekennzeichnet, dass** wenigstens ein leitendes Element ein leitender Draht (13, 14) ist.

4. Vorrichtung nach einem der Ansprüche 1-3, **dadurch gekennzeichnet, dass** wenigstens ein leitendes Element eine leitende Dichtung (17, 18) ist.

5. Vorrichtung nach Anspruch 1, **dadurch gekennzeichnet, dass** sie zwei Endabschnitte (62, 63), welche einen Nutzwiderstand aufweisen, der zwischen 100 kΩ und 500 kΩ enthalten ist, und wenigstens ein genanntes leitendes Element (14, 14'), welches an einem einzigen Endabschnitt (63) angeordnet ist und diesen mit dem entsprechenden leitenden Ansatzstück verbindet, aufweist.

6. Vorrichtung nach Anspruch 1, **dadurch gekennzeichnet, dass** sie einen ersten Endabschnitt (62), welcher einen Widerstand aufweist, der zwischen 100 kΩ und 500 kΩ enthalten ist, und einen zweiten Endabschnitt (63), welcher einen Nutzwiderstand aufweist, der geringer ist als dieser Wert, und wenigstens ein genanntes leitendes Element (14, 14'), welches an dem zweiten Endabschnitt (63) angeordnet ist und diesen mit dem entsprechenden leitenden Ansatzstück (12) verbindet, aufweist.

7. Vorrichtung nach einem der vorhergehenden Ansprüche, **dadurch gekennzeichnet, dass** der Zentralabschnitt (61) aus einem thermoplastischen, einem wärmehärtbaren oder einem elastomeren Material mit leitenden Füllstoffen ist.

8. Vorrichtung nach einem der vorhergehenden Ansprüche, **dadurch gekennzeichnet, dass** wenigstens ein Endabschnitt (62) aus einem mit Glasfasern und leitenden Füllstoffen gefüllten Material ist.

9. Vorrichtung nach einem der vorhergehenden Ansprüche, **dadurch gekennzeichnet, dass** wenigstens ein Endanschluss (64, 65) aus einem thermoplastischen oder wärmehärtbaren Material mit optional leitenden Füllstoffen ist.

10. Vorrichtung nach einem der vorhergehenden Ansprüche, **dadurch gekennzeichnet, dass** wenigstens ein Endabschnitt (62, 63) einen Fortsatz (61') des Zentralabschnitts (61) aufweist, welches aufeinanderfolgend von einer leitenden Muffe (62', 63') und einem Endanschluss (64', 65') umgeben ist.
